# EUROPEAN PATENT SPECIFICATION

(11) **EP 1 641 239 B1**
(45) Date of publication and mention of the grant of the patent: **03.01.2018**
(21) Application number: 05020800.8
(22) Date of filing: 23.09.2005
(51) Int. Cl.: H04N 1/21

(54) **Photography device with video recording function**
Digitale Kamera mit Videoaufnahmefunktion
Appareil-photo numérique avec une function d'enregistrement video

(30) Priority: 24.09.2004 JP 2004277213
(43) Date of publication of application: 29.03.2006
(73) Proprietor: CASIO COMPUTER CO., LTD., Shibuya-ku, Tokyo 151-8543 (JP)
(72) Inventor: Miyata, Akira, c/o I. P. Dpt. Casio Comp. Co.Ltd, Hamura-shi Tokyo 205-8555 (JP)
(74) Representative: Grünecker Patent- und Rechtsanwälte PartG mbB

(56) References cited:
- US-A1- 2004 051 803
- US-A1- 2004 179 122
- PATENT ABSTRACTS OF JAPAN vol. 2000, no. 12, 3 January 2001 (2001-01-03) & JP 2000 270251 A (SANYO ELECTRIC CO LTD), 29 September 2000 (2000-09-29)

## Description

### CROSS-REFERENCE TO RELATED APPLICATION

This application is based upon and claims the benefit of priority from the prior Japanese Patent Application No. 2004-277213, filed September 24, 2004.

### BACKGROUND OF THE INVENTION

### 1. Field of the Invention

The present invention relates to a photography device with a video recording function having a video recording feature which can be used for a digital camera.

### 2. Description of the Related Art

In recent years, digital cameras have been emerging which can perform video recording due to technological advances.

Additionally, a user can record desired still image photography and video recordings by a setup of imaging conditions, such as white balance, etc. to perform still image photography and video recording.

Further, in conventional prior art, an invention of a digital camera has been disclosed in Japanese Laid-Open (Kokai) Patent Application No. 2000-270251 titled "DIGITAL CAMERA." In particular, the described digital camera can change the image quality without interrupting recording by providing an input section for inputting commands to change the image quality during a video recording and a function for changing the compression ratio of images based on a command from the input section during a video recording.

However, in a conventional digital camera, etc. during a video recording, the setup of imaging conditions, for example, white balance could not be changed. Even if a user considered changing the setup of imaging conditions during a video recording, the image condition setup change had to be abandoned.

Also, in cases when the user wanted to inevitably change an imaging condition, the video recording had to be stopped one time and a video recording resumed after changing the setup of an imaging condition.

According to the technology mentioned in the above-mentioned conventional prior art in JP 2000-270251, image quality can be changed even if during a video recording by manipulating an input section. However, a plurality of input sections corresponding to each imaging condition must be provided to change a plurality of imaging conditions, for example, white balance, exposure, sensitivity, etc. Thus, there is a problem which cannot be accommodated in the digital camera, as well as in not advancing a light weight and miniaturized device.

Also, even if provided with an input section for each imaging condition, the user has to intentionally memorize which input section, button or key changes whichever imaging condition. Thus, usability becomes difficult and an existing problem of being troublesome.

US 2004/174444 A1 describes a camera according to the preamble of claim 1.

### SUMMARY OF THE INVENTION

The present invention has been made in view of the above-mentioned conventional problems. Accordingly, an object of the present invention is to provide a photography device with a video recording function which can easily change different various item fields in the setup of imaging conditions during video recording while maintaining a light weight and miniaturized construction.

In order to achieve the above-mentioned object, there is provided a photography device, characterized by the features of claim 1.

In order to achieve the above-mentioned object, there is provided a photography method for the photography device according to claim 1 characterized by the steps of claim 14.

In order to achieve the above-mentioned object, there is provided a program documentation medium for storing a recording control program executed by a processor in the photography device of claim 1, characterized by the steps of claim 15.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

FIG. 1 is a block diagram of the digital camera of an embodiment of the present invention;
FIG. 2 is a flow chart showing operation of the digital camera of an embodiment of the present invention;
FIG. 3 is a flow chart showing operation of the digital camera of an embodiment of the present invention;
FIGS. 4A∼4B are diagrams showing the appearance of the screen displayed in an image display section 10 before menu display and after menu display;
FIGS. 5A∼5B are diagrams showing the appearance of an image displayed in the image display section 10 when switched to a state where white balance can be changed;
FIGS. 6A∼6B are diagrams showing the appearance of an image displayed in the image display section 10 when switched to a state where EV (exposure correction) can be changed;
FIGS. 7A∼7B are diagrams showing the appearance of an image displayed in the image display section 10 when switched to a state where sharpness and filter can be changed;
FIGS. 8A∼8B are diagrams showing the appearance of video data recorded in a flash memory 11 in an embodiment of the present invention and modified example three;
FIG. 9 is a diagram showing the appearance of video data recorded in the flash memory 11 of the modified example three; and
FIG. 10 is a diagram showing the appearance of video data recorded to the flash memory 11 of modified example three.

### DETAILED DESCRIPTION OF THE PREFERRED EMBODIMENTS

Hereinafter, the preferred embodiments of the present invention will be described in detail with reference to the drawings.

### [Embodiment of the Present Invention]

### A. Digital Camera Configuration

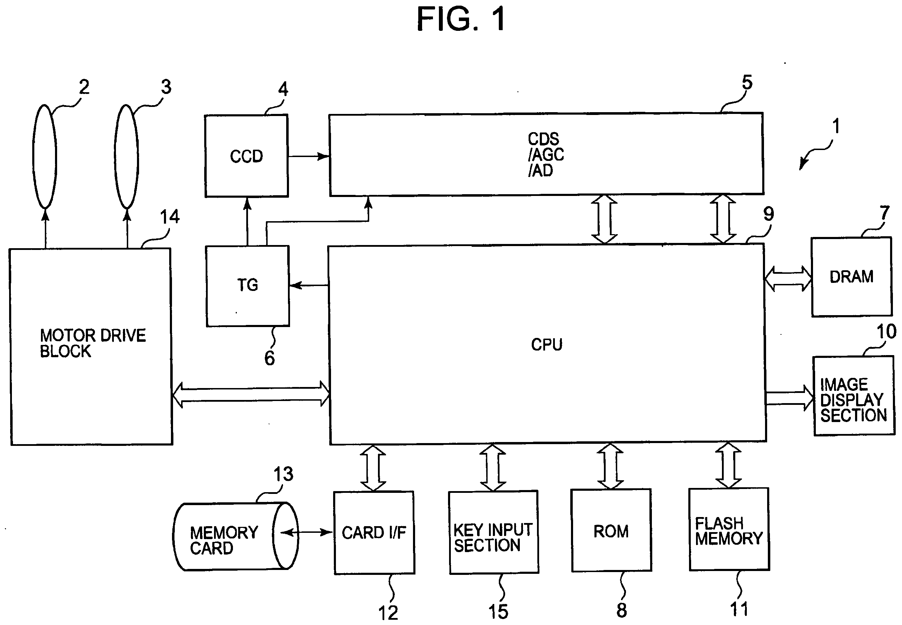

FIG. 1 is a block diagram showing the electrical outline configuration of a digital camera 1 which actualizes the photography device of the present invention.

The digital camera 1 comprises a focus lens 2, a zoom lens 3, a CCD 4, a unit circuit 5, a TG 6 (Timing Generator), a DRAM 7, a ROM 8, a CPU 9, an image display section 10, a flash memory 11, a card interface 12, a motor drive block 14 and a key input section 15. In the card interface 12, a memory card 13 can be connected that is easily removably attachable to the camera main body card slot (omitted from diagram) . The focus lens 2 and the zoom lens 3 configurations from the lens group are not shown separately. The motor drive block 14 constitutes the focus lens 2 and the zoom lens 3 which are driven in an optical axis direction by a focus motor and a zoom motor; and a driver which drives the focus motor and the zoom motor according to a control signal from the CPU 9, respectively.

The CCD 4 (imaging means) performs photoelectric conversion for the light of an imaged object projected via the focus lens 2 and the zoom lens 3 and outputs to the unit circuit 5 as an imaging signal. Also, the CCD 4 is driven with a timing signal of a predetermined frequency generated by the TG 6. The unit circuit 5 is connected to the TG 6. The unit circuit 5 is constituted by a CDS (Correlated Double Sampling) circuit which performs and retains a correlation double sampling of an imaging signal outputted from the CCD 4, a gain adjustment amplifier (AGC) then amplifies the same imaging signal and an AD converter (AD) converts the imaging signal after amplification into a digital signal. The output signal of the CCD 4 is forwarded to the CPU 9 as a digital signal through the unit circuit 5.

The CPU 9 is a one chip microcomputer which controls each section of the digital camera 1 while having the functions of performing image processing of video data (pixel interpolation processing, gamma (γ) correction processing, generation of a luminosity color difference signal, white balance processing, etc.), compression-expansion of video data, etc. (for example, compression-expansion of JPEG, MPEG formats).

The image display section 10, including a color LCD and its driver circuit, displays photographed object images which have been imaged by the CCD 4 as through images when the digital camera 1 has been placed in a photography standby state. Recorded images (still images/videos) are readout and expanded from the flash memory 11 used for storage or the memory card 13 during playback of these recorded images and then displayed. The image display section 10 is equivalent to the display means of the present invention.

The key input section 15 outputs a manipulation signal corresponding to a user' s keystroke operation to the CPU 9 that includes a plurality of operation keys, for example, a mode key, a shutter button key, a menu screen key, a "SET" key, a cursor key (↑, ↓, ←, →) and a cancel key. This key input section 15 is equivalent to the menu display instruction means, the setup change means and the selection means of the present invention.

The DRAM 7 is used as a buffer memory for video data temporary storage of digitized imaged objects after being imaged by the CCD 4, as well as a working memory for the CPU 9. The program required for controlling each section of the digital camera 1 (the motor drive block 14, the image display section 10, etc.) by the CPU 9 and the data required for controlling each section are archived in the ROM 8. The CPU 9 functions as a photography device of the present invention according to the above-mentioned program.

The flash memory 11 and the memory card 13 are recording medium (recording means) for saving recorded video data, etc. In the embodiment, although recorded video data is archived (saved) in the flash memory 11, video data, etc. can also be recorded in the memory card 13 by operation of the user's key input section 15.

### B. Digital Camera Functions

Hereinafter, the function of each configuration constituting the characteristics of the digital camera 1 in the preferred embodiment will be explained.

Notably, the below described video recording processing is synonymous with various related terminology such as moving images, motion images, digital recording, MPEG, JPEG, AVI files, etc.). Furthermore, collective references to "imaging conditions" can be variously expressed as recording conditions, video recording conditions, camera setup conditions, photography conditions, etc. Also, an "imaging condition" is a single photography setup item field among a number of "imaging conditions.")

When a manipulation signal corresponding to the video recording mode setup has been sent by operation of the mode key from the user's key input section 15, the CPU 9 applies image processing (pixel interpolation processing, white balance processing, etc.) to the video data of the imaged object processed by the CCD 4 and stores the data in the buffer memory (DRAM 7) . Subsequently, what is called a through image display for displaying this stored video data in the image display section 10 is performed.

Also, when the CPU 9 judges that a manipulation signal has been sent corresponding to a depression of the shutter button from the key input section 15, video recording processing commences.

The video recording processing compresses the video data stored in the buffer memory, which is followed by processing for archiving in the flash memory 11 (recording control means) . At this stage, the images (recorded images) photographed by the image video recording processing are displayed in the image display section 10 (image display control means)

When video recording processing commences, the CPU 9 judges whether or not a manipulation signal corresponding to the menu screen key has been sent from the key input section 15. When determined as having been sent, a menu display (current imaging conditions, information for changing an imaging condition, etc.) together with the recorded images are displayed in the image display section 10 (menu display control means).

At this point, the user can execute (for example, setup change for an imaging conditions) various setting changes (setup changes) by manipulating the key input section 9 according to the menu display in the image display section 10. The details of this setup change for imaging conditions will be described later.

Also, the CPU 9 judges whether or not there has been a change of setup for an imaging condition (discrimination means) . This determination is judged by whether or not a manipulation signal command has been sent to perform a change of setup for an imaging condition from the key input section 15.

Then, whenever the setup for an imaging condition has been changed, the CPU 9 will be discriminated and will execute a setup change for an imaging condition according to an imaging condition changed by the user. Specifically, whenever a manipulation signal command is sent from the key input section 15 to perform a change of the setup for an imaging condition, the CPU 9 applies image processing to the video data imaged by the CCD 4 in order to establish this imaging condition setup change and then records in the flash memory 11 (recording control means).

Here, based on the video recording processing, the imaging condition of video data archived in the flash memory 11 becomes different relative to before and after a setup change of an imaging condition.

Besides, the CPU 9 judges whether or not a manipulation signal corresponding to the cancel key has been sent from the key input section 15 and, when sent, the menu display is terminated.

The CPU 9 performs the operation described above until a manipulation signal command (manipulation signal corresponding to a depression of the shutter button) has been sent to terminate the video recording from the key input section 15. Accordingly, the processing which archives the video data stored in the buffer area imaged by the CCD 4 to the flash memory 11 is discontinued.

### C. Digital Camera 1 Operation

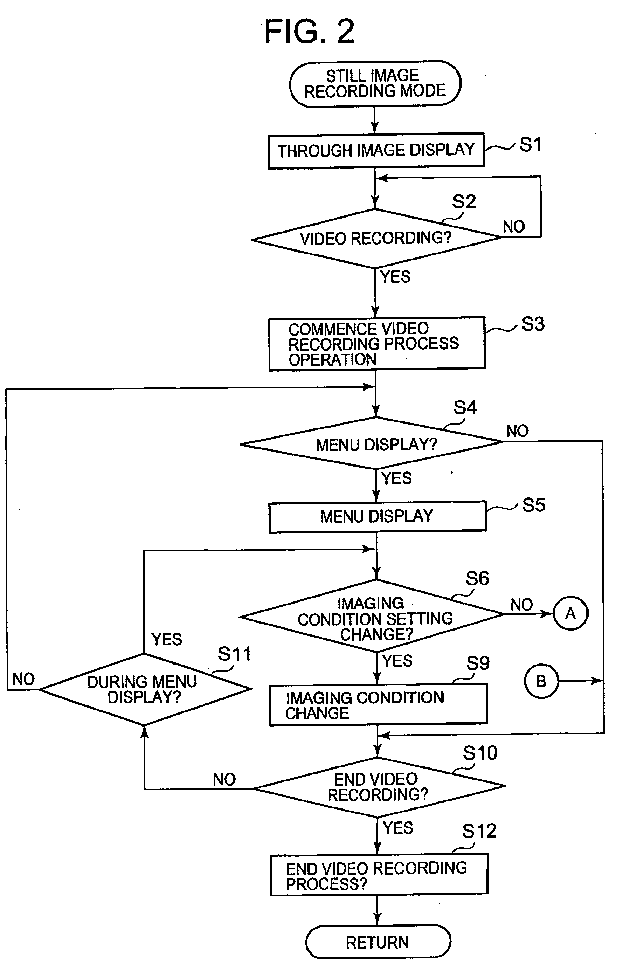

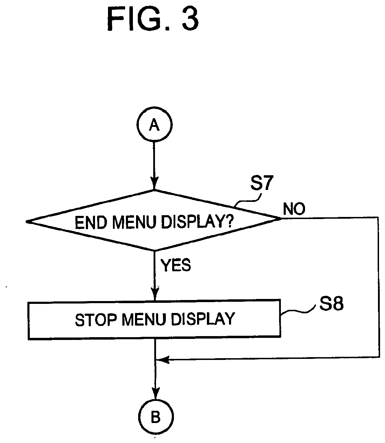

The operation of the digital camera 1 in the first preferred embodiment will be explained according to the flow chart of FIG. 2 and FIG. 3.

When set to the video recording mode by operation of a mode key from the user's key input section 15, at Step S1, the operation commences imaging to the CCD 4 and a through image of an imaged object will be displayed in the image display section 10. At this stage, as the image is displayed in the image display section 10, image processing is applied by the CPU 9 and the video data image being stored in the buffer memory is displayed.

Next, at Step S2, the CPU 9 judges whether or not a video recording is to be performed. This determination is judged by whether or not the CPU 9 received a manipulation signal corresponding to a depression of the shutter button from the key input section 15. Whenever the CPU 9 received a manipulation signal corresponding to a depression of the shutter button from the key input section 15, the operation judges that a video recording is to be performed.

At Step S2, when judged that a video recording is not to be performed, the operation will remain at Step S2 until determined that a video recording is to be performed. When judged that a video recording is to be performed, the operation will advance to Step S3 and video recording process commences.

With regard to the video recording process, the processing for archiving video data imaged by the CCD 4 is accomplished at a predetermined frame rate (fixed period of 1/30 second) in the flash memory 11. At this stage, the video data imaged by the CCD 4 undergoes image processing (pixel interpolation processing, etc.) and compression processing by the CPU 9 and then is recorded in the flash memory 11. Also, since images processed by the CCD 4 are displayed in the image display section 10, images archived by video recording process will be displayed in the image display section 10.

Next, the operation advances to Step S4 and judges whether or not a menu display is to be performed. This determination is judged by whether or not a manipulation signal has been sent to the CPU 9 corresponding to operation of the menu screen key of the user's key input section 15. Even if during a video recording, this menu display can be activated by the user in order to make a change to an imaging condition, etc.

At Step S4, when judged that the menu display is not to be performed, the operation will advance to Step S10. When judged that a menu display is to be performed, the operation advances to Step S5 and displays a menu as the photographed object image undergoing video recording processing in the image display section 10.

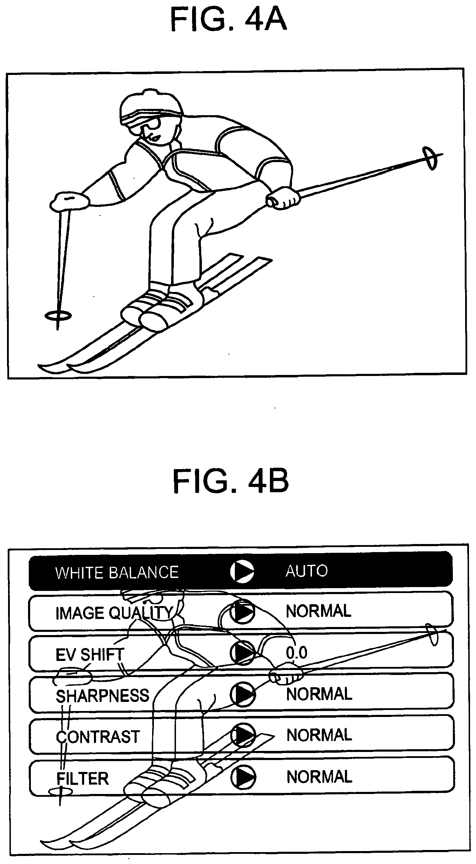

Here, directly before a menu display is performed, for example, an image as shown in FIG. 4A will be displayed. The image displayed in FIG. 4A is an image of an imaged object (person skiing) currently being processed as a video recording.

Also, when a menu display is performed, for example, an image as shown in FIG. 4B will be displayed. As seen in FIG. 4B, in the image display section 10, the menu (here, limited to the menu for changing an imaging condition of a video recording) is displayed in front (superimposed) of the photographed object image (person skiing) currently being recorded.

As for the contents of the menu display, for example, "WHITE BALANCE", "IMAGE QUALITY", "EV SHIFT", etc. are shown. Currently, the setup shows the item fields for "WHITE BALANCE: AUTO", "IMAGE QUALITY: NORMAL", "EV SHIFT: 0.0", "SHARPNESS: NORMAL", "CONTRAST: NORMAL" and "FILTER: NORMAL". Also, because the current video recording is ongoing, the menu being displayed is transparent so that the recording imaged object will not be hidden by the menu display.

Moreover, although currently the item field of the white balance is displayed in black, this represents a state where currently the white balance has been selected. Namely, the white balance is selected as the item field when the user wants to change an imaging condition.

Here, when a user manipulates "↓" of the cursor key of the key input section 15, the item selected will sequentially switch downwardly the "WHITE BALANCE" → "IMAGE QUALITY" →- "EV SHIFT" → "SHARPNESS". Also, when "↑" of the cursor key is manipulated, the item selected will switch in reverse sequence to "↓".

In this manner, the user can select an item field to change an imaging condition by manipulating "↑" and "↓" of the cursor key.

Besides, in a state where the item field to change an imaging condition is selected, when the user manipulates "→" of the cursor key, the screen will switch to a state where the selected item field can be changed. For example, in a state where the white balance is selected, when the user manipulates "→" of the cursor key, this item field will switch to a state where the white balance can be changed.

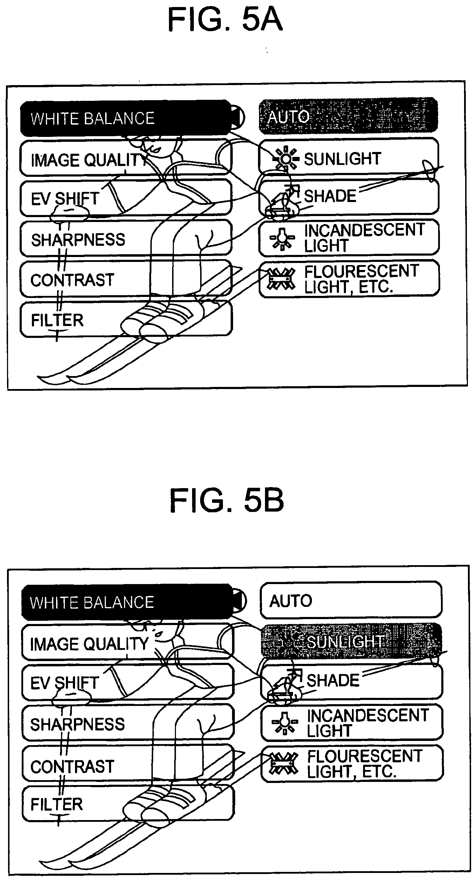

FIG. 5A shows the appearance of an image displayed in the image display section 10 when switching to a state where the white balance can be changed. On the right side of the item field for "WHITE BALANCE", the item fields "AUTO", "SUNLIGHT", "SHADE", "INCANDESCENT LIGHT", "FLOURESCENT LIGHT", etc. are displayed. "AUTO" adjusts the white balance in order that white is automatically reflected as white. When recording in sunlight, "SUNLIGHT" adjusts the white balance in order that white is reflected as white. When recording in the shade, "SHADE" adjusts the white balance in order that white is reflected as white. The same can be said of "INCANDESCENT LIGHT" and "FLOURESCENT LIGHT".

Because currently the setup of the white balance is "AUTO", the digital camera 1 is in a state where "AUTO" is selected (state where the item field of "AUTO" is black).

Here, when the user manipulates "↓" of the cursor key of the key input section 15, the item field selected is sequentially switched, such as "AUTO" → "SUNLIGHT" → "SHADE" → "INCANDESCENT LIGHT" → "FLOURESCENT LIGHT". At this time, whenever the white balance is changed (whenever changed in the item field selected), the recording image is displayed in the image display section 10 based on the imaging condition of the changed white balance. Accordingly, the user can set own preference of the white balance which can also be set as the user observes an image being displayed in the image display section 10. Here, the user has to be careful. Although the white balance of the image being displayed in the image display section 10 changes whenever an imaging condition of the white balance changes, the white balance of recorded images archived in the flash memory 11 does not change. Also, the white balance for recording images archived in the flash memory 11 changes when the user ultimately decides to finalize a change of the setup for an imaging condition. Specifically, when the user manipulates the "↑", "↓" of the cursor key in a state of selecting an imaging condition of a certain white balance and there has been a manipulation of the "SET" key.

Here, for example, since the current photography situation for recording is in sunlight, the user should select "SUNLIGHT" by manipulating the cursor key "↓".

Then, when the user manipulates the "SET" key to a state where "SUNLIGHT" is selected, the setup of the white balance is changed (setup change) from "AUTO" to "SUNLIGHT". Here, the first video data where image processing is applied based on this imaging condition setup change is archived in the flash memory 11. Specifically, although video data for "AUTO" white balance has been archived before a setup change (before manipulation of the "SET" key), video data for "SUNLIGHT" white balance will be archived after a setup change (after manipulation of the "SET" key) in the flash memory 11.

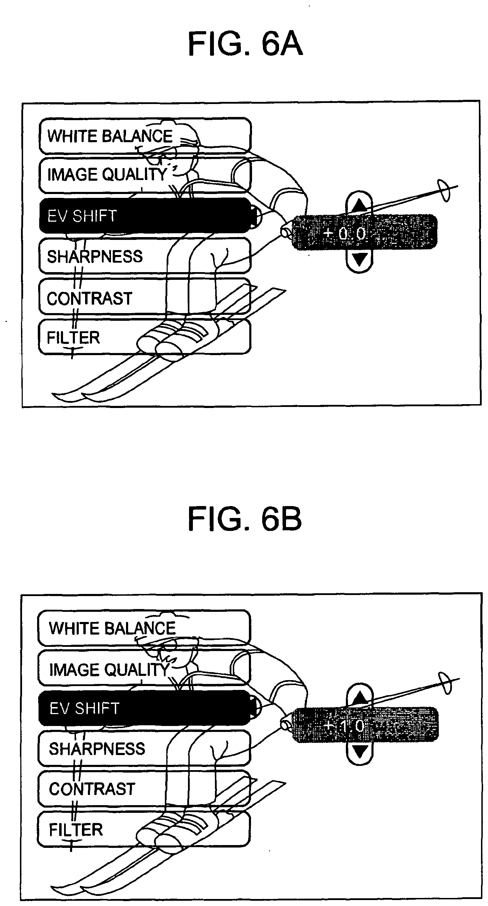

Additionally, in the state shown in FIG. 4B, when the user manipulates the "↓" of the cursor key to select "EV SHIFT" and the "→" of the cursor key is manipulated, the menu display switches to a state where EV (Exposure Value) can be changed as shown in FIG. 6A. Namely, the menu display switches to a state where exposure correction (also known as Exposure Compensation (EC)) can be changed.

As seen in FIG. 6A on the right side of the item field "EV SHIFT", "±0.0" is displayed. The "±0.0" indicates that the current exposure correction setup is "±0.0", namely, a state where exposure correction is not performed.

Also, the user's manipulation of the " f" of the cursor key will display the exposure correction value as"±1.0" as seen in FIG. 6B. Subsequently, when the "↑" is manipulated, the exposure correction value increases (changes), such as "±2.0" →- "±3.0." Also, when the "↓" of the cursor key is manipulated, this value decreases contrary to "↑." For example, when the current value is "±0.0" and the "↓" of the cursor key is manipulated, the exposure correction value decreases (changes), such as "±0.0" → "-1.0" → "-2.0."

Even at this stage, as mentioned above, whenever the exposure correction value is changed, the recording image is displayed in the image display section 10 based on the changed exposure correction value. The exposure correction value of recorded images archived in the flash memory 11 does not change. For example, in the state shown in FIG. 6B where the exposure correction value has been changed to "±1.0" and when the user manipulates the "SET" key, a setup change of the exposure correction value is made from "±0.0" to "±1.0. " Here, the first video data where image processing is applied based on this imaging condition setup change is archived in the flashmemory 11. Specifically, although video data for the exposure correction value of "±0.0" has been archived before a setup change (before manipulation of the "SET" key), video data for the exposure correction value "±1.0" will be archived after a setup change (after manipulation of the "SET" key) in the flash memory 11.

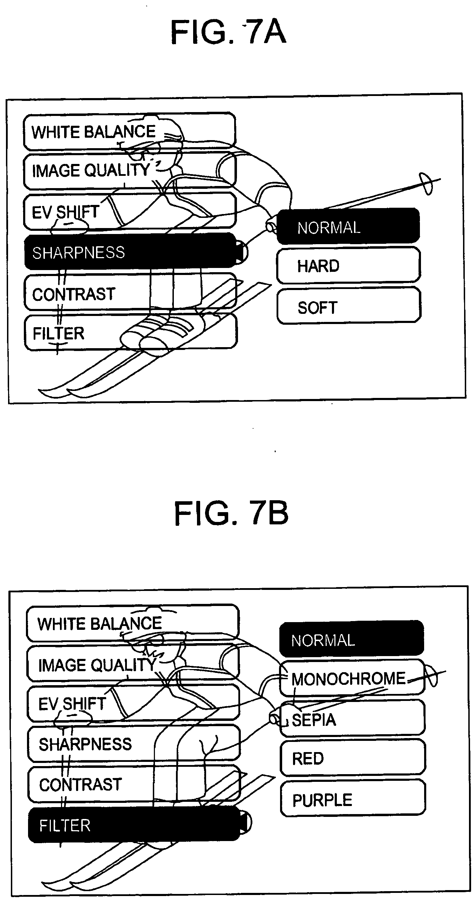

Additionally, in the state shown in FIG. 4B, when the user manipulates the "↓" of the cursor key to select "SHARPNESS" and the "→" of the cursor key is manipulated, the menu display switches to a state where the sharpness can be changed as shown in FIG. 7A. Here, a setup change for sharpness can be performed in three levels of "NORMAL", "HARD" and "SOFT."

Also, in the state shown in FIG. 4B, when the user manipulates the "↓" of the cursor key to select "FILTER" and the "→" of the cursor key is manipulated, the menu display switches to a state where the filter can be changed as shown in FIG. 7B. Here, a setup change for the filter can be performed in five varieties of "NORMAL", "MONOCHROME", "SEPIA", "RED" and "PURPLE." Image processing is applied with "MONOCHROME" so that a recording image has a monochrome undertone. Image processing is applied with "SEPIA" so that a recording image has a sepia undertone. Image processing is applied with "RED" so that a recording image has a red undertone. Image processing is applied with "PURPLE" so that a recording image has a purple undertone.

Additionally, in a state where the user can change an imaging condition, namely, when the "SET" key has been manipulated as shown in FIG. 5B and 6B, a setup change of an imaging condition is performed and an image as shown in FIG. 4B is displayed in the image display section 10.

Besides, in a state where the user can change an imaging condition, namely, when "←" of the cursor key is manipulated without manipulating the "SET" key in a state as shown in FIG. 5A, FIG. 5B, FIG. 6A, FIG. 6B, FIG. 7A and FIG. 7B, an image as shown in FIG. 4B is displayed in the image display section without performing a setup change of an imaging condition.

Also, when the user manipulates the cancel key in a state where an image as shown in FIG. 4B or FIG. 5A, FIG. 5B, FIG. 6A, FIG. 6B, FIG. 7A and FIG. 7B is displayed, only a photographed object image is displayed in the image display section as shown in FIG. 4A.

Furthermore, although uncommon that the appearance, size and posture of an imaged object (person skiing) as shown in FIGS. 4A∼7B will be identical because this is a video recording, here the appearance, size and posture of the imaged object in FIGS. 4A∼7B is, for convenience of explanation, is identical.

Now returning to the flow chart in FIG. 2, a menu display is performed at Step S5. The operation then advances to Step S6 and judges whether or not a setup change of an imaging condition has been performed. This determination is judged by whether or not the above-mentioned manipulation signal corresponding to manipulation of the "SET" key of the user's key input section 15 has been sent to the CPU 9. For example, as shown in FIG. 5B, when the "SET" key has been pressed in a state where the item field of "SUNLIGHT" for white balance has been selected, the CPU 9 judges that there has been a setup change of an imaging condition.

When the CPU 9 judges that a setup change of an imaging condition has not been performed at Step S6 (i.e., when a manipulation signal corresponding to manipulation of the "SET" key has not been sent to the CPU 9 from the key input section 15), the operation advances to Step S7 of FIG. 3 and judged whether or not the menu display has been terminated. As described above, this determination is judged by whether or not a manipulation signal corresponding to manipulation of the user's cancel key has been sent to the CPU 9.

When the CPU 9 judges that the menu display has been terminated at Step S7, the operation advances to Step S8 and display of the menu in the image display section 10 is discontinued and advances to Step S10 of FIG. 2. When judged that the menu display has not been terminated, the operation advances to Step S10 of FIG. 2 in that status.

On the other hand, when the CPU 9 judges at Step S6 an imaging condition has been changed, the operation advances to Step S9. Then, after performing the setup change of an imaging condition, the operation advances to Step S10. Namely, video data archived in the flash memory 11 after a setup change is composed of video data to which image processing has been applied so as to become the imaging condition of the setup change. For example, when the item field of "SUNLIGHT" for white balance has been selected, video data to which image processing has been performed in order that white is automatically reflected as white in sunlight will be archived.

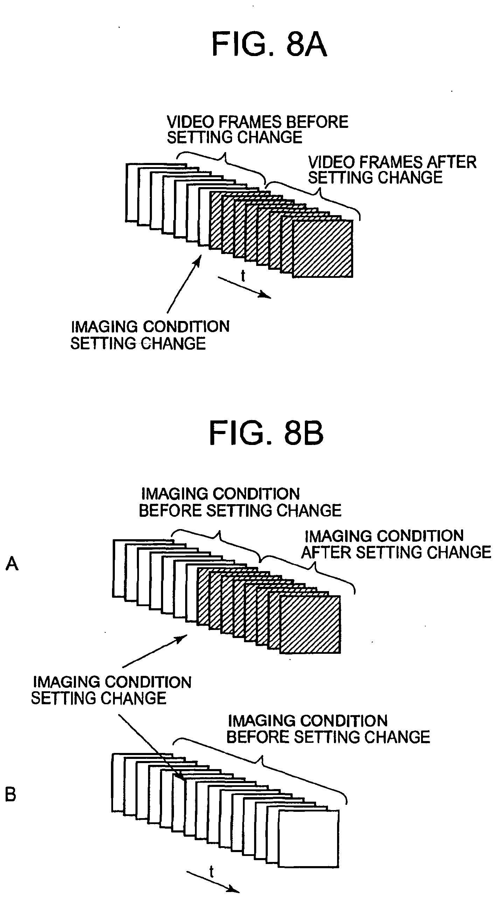

FIGS. 8A shows the appearance of video data recorded in the flash memory 11 in an embodiment of the present invention and modified example three. As seen in this drawing, the video data is composed of a plurality of frames. Also, "t" expresses a time axis in the direction of the arrow. White frames indicate a recorded frame according to an imaging condition upon commencing a video recording process . Outlined frames with diagonal lines indicate a recorded frame according to an imaging condition setup change during a video recording process.

The other arrow in FIG. 8A shows the time point of an imaging condition setup change being performed. Also, FIG. 8A shows the video data recorded (archived) in the flash memory 11 will change based on imaging conditions before and after a setup change.

When the operation advances to Step S10, the CPU 9 judges whether or not video recording processing has been terminated. This determination is judged by whether or not a manipulation signal has been sent to the CPU 9 corresponding to a depression of the shutter button from the user's key input section 15. Here, the CPU 9 commences a video recording process when the shutter button is depressed one time. Moreover, when the shutter button is depressed once again, video recording processing is terminated. Besides, when the shutter button is depressed a video recording process commences and when the depression state of the shutter button is cancelled, the video recording archive (save) processing can be terminated. Also, when video data being archived reaches the storage capacity limit of the flash memory 11, the operation can also judge that the video recording archive processing must be terminated.

When the CPU 9 judges that a video recording has not been terminated at Step S10, the operation will advance to Step S11 and judge whether or not a menu display is to be performed. When a menu display is not to be performed, the operation reverts to Step S6. Conversely, when a menu display is to be performed, the operation reverts to Step S4 and the above-mentioned is repeated.

On the other hand, when the CPU 9 judges that a video recording has been terminated, the operation will advance to Step S12 and the video recording archive processing will be terminated. Namely, the processing which archives (saves) the image data processed by the CCD 4 and stored in the buffer memory (DRAM 7) is terminated.

Needless to say, video data archived in the flash memory 11 is only the video data imaged by the CCD 4 and image data (data related to the menu screen) of the menu displayed in the image display section 10 is not archived in the flash memory 11. In other words, only the video data of a recording image is archived in the flash memory 11 within the recording image displayed in the image display section 10 and the menu. Recording in flash memory of the data related to the menu screen is prohibited.

In the first preferred embodiment mentioned above, since a menu display can be performed even if during a video recording, the setup of an imaging condition, etc. can be easily changed as video recording progresses and maintained in a light weight and miniaturized digital camera 1. Further, since recording can be performed of video for one group of different imaging conditions, during playback, for example, the difference in effect for a before and after setup change of the white balance can be confirmed.

Also, in the above-mentioned preferred embodiment, although a menu for performing a setup change of an imaging condition for video recording is displayed, which makes it possible to perform a setup change of an imaging condition for video recording, it is possible to change the setup of various functions provided in the camera which are not an imaging condition for video recording. For example, a menu for performing a setup change of an imaging condition for still picture photography, a menu for performing a setup change of settings (such as a calendar, etc.), etc., which are completely unrelated photography settings.

### [Modified Example One]

The following modified example is also practicable for the above-mentioned preferred embodiment.

This is a modified example one in which a first mode and a second mode are comprised. The first mode may be set by manipulation of the mode key from the user's key input section 15 such as the above-mentioned preferred embodiment even if a menu display is performed during a video recording process and only the video data imaged by the CCD 4 is archived in the flash memory 11. Also, the second mode may be set by manipulation of the mode key from the user's key input section 15 made to archive not only the video data imaged by the CCD 4, but the image data (data related to the menu) of the menu displayed in the image display section 10.

Accordingly, in the second mode, the data of an image (the same menu image of when a photographed object image and the menu display are performed) displayed in the image display section 10 during video recording archive processing is saved in the flash memory 11 in that condition.

The video data imaged by the CCD 4 and the image data of the menu display are correlated and made to archive in the flash memory 11. Further, composite of the video data and the menu display image data can be made to archived as combined video data.

Accordingly, since a menu is also displayed with the recorded image data during playback of the video data, the steps required to perform an imaging condition change becomes easily recognizable. Furthermore, by being able to observe the current situation of an image before and after changing an imaging condition, the user can study exactly how an image will change when displayed and a setup for future imaging conditions can be anticipated. In this manner, appropriate imaging conditions can be set up corresponding to the photography situation, photograph intention, etc.

Additionally, when having a configuration which records composite video data and image data of the menu display in the second mode, by setting up the first mode so as to not record composite video data and image data of the menu display, the perceived annoyance of the user by the menu being displayed as video during video playback can be avoided. Also, when having a configuration which records correlated video data and image data of the menu display in the second mode, by setting up the first mode so to not record correlated video data and image data of the menu display, only the portion of the image data of the menu display is not recorded which reduces the volume of data. In this manner, the storage capacity of the flash memory 11 can be used efficiently.

Moreover, when video data and image data of the menu display are correlated and archived, the operation can be configured to make the user judge whether or not the correlated and archived image data of the menu display is also to be replayed during playback of video data.

Accordingly, in cases when not performing a menu display, since the menu is not displayed the perceived annoyance of the user by the menu being continuously displayed with the video during video playback can be avoided.

### [Modified Example Two]

The following modified example is also practicable for the above-mentioned preferred embodiment.

In the recording processing of the above-mentioned preferred embodiment, video recording archive processing saves the video data imaged by the CCD 4 in the flash memory 11. Also, at that time, the video data archived in the flash memory 11 is video data imaged by the CCD 4 which undergoes image processing corresponding to a setup imaging condition (imaging condition setup change during a video recording) . In the modified example two, intact video data imaged by the CCD 4, namely, unprocessed video data (video data, such as raw data, etc., which has neither undergone image processing nor compression processing) without image processing being applied corresponding to the setup imaging condition is archived in that condition. Also, the setup information of the imaging conditions relating to this stored video data is archived.

The setup information of the imaging conditions is data which represents recording according to the types of imaging conditions (white balance, exposure, etc.). When an imaging condition setup change is performed, the setup information of an imaging condition from that changed time point also becomes changed. Namely, when an imaging condition setup change is performed, the data setup change before and after a setup change will be archived.

Then, upon playback of the video data, image processing is applied to this archived video data according to this setting change information, and this applied video data is displayed in the image display section 10.

Accordingly, since video data is archived without applying any image processing corresponding to an imaging condition setup, even if the user's intentions change after recording, image processing (white balance, contrast, etc.) composed of a separate imaging condition can be performed. Also, since it is not necessary to perform image processing corresponding to an image condition setup during video recording archive processing, the load of the video recording archive processing can be reduced.

### [Modified Example Three]

The following modified example is also practicable for the above-mentioned preferred embodiment.

In the above-mentioned preferred embodiment, when an imaging condition setup change is performed during video recording archive processing, image processing is applied according to the imaging condition after this setup change and then archived in the flash memory 11.

In the modified example three, even if it is a case where a setup change of an imaging condition is performed, the operation may also be configured to archive video data (source video data) to which image processing has been applied according to the imaging conditions at the time of commencing image recording archive processing.

Namely, in the modified example three the video data is archived in the flash memory 11 when a setup change is made during video recording archive processing and both the video data to which image processing has been applied according to an imaging condition after a change (the video data archived in the flash memory 11 by the above-mentioned preferred embodiment) and source video data (without applied image processing) will be archived.

Also, in the modified example three, although explained on the assumption that an imaging condition setup change is performed during video recording archive processing, when a setup change is not made during video recording archive processing, the number of the video data archived in the flash memory 11 is one file.

FIG. 8B shows the appearance of video data recorded in the flash memory 11 in the modified example three. As mentioned above, the white frames indicate a recorded frame according to an imaging condition upon commencing video recording processing. Outlined frames with diagonal lines indicate a recorded frame according to an imaging condition setup change during the video recording process.

As see in FIG. 8B, "A" indicates video data which has been archived in the flash memory 11 and in which a setup change was performed, and "B" indicates source video data archived in the flash memory 11.

The setup changed video data "A" typifies an imaging condition that changed from the time point that the imaging condition setup change has been performed. On the other hand, the source video data "B" typifies that even if an imaging condition setup change is performed, the imaging condition does not change and remains the imaging condition at the time a recording process commences.

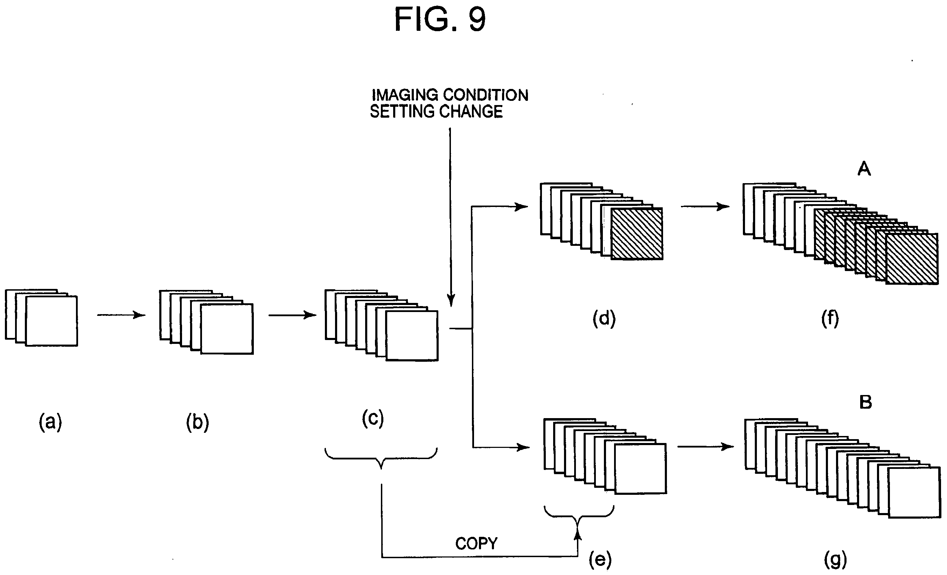

Next, an example of the recording process method of the source video data "B" and the video data "A" after a setup change will be explained according to the timing chart of FIG. 9.

Upon commencement of a video recording archive processing, each recorded frame is archived (saved), respectively. FIG. 9 (a), (b), (c) show the state roughly at this time. The number of frames currently archived increases as the time duration of the video recording elapses.

Then, at the time point of FIG. 9(c), an imaging condition setup change has been performed. As shown in FIG. 9(d), subsequent to the frames archived until then, the frame to which image processing has been applied according to an imaging condition setup change is then archived. Next, the succeeding frames according to this imaging condition setup change are also archived, respectively. By performing this processing, as shown in FIG. 9(f), the video data "A" in which a setup change has been performed will be archived in the flash memory 11.

Moreover, as shown in FIG. 9(e), when an imaging condition setup change is performed, a copy of all frames archived before an imaging condition setup change are archived in the flash memory 11. Subsequent to this archived copy of frames, the frame to which image processing according to the imaging conditions at the time image recording processing commenced is archived. Next, the succeeding frames to which image processing has been applied according to the imaging conditions at the time of image recording processing commenced are also archived, respectively. By performing this processing, as shown in FIG. 9(g), the source video data "B" will be archived in the flash memory 11.

Namely, when an imaging condition setup change is performed, the CPU 9 performs image processing according to the imaging conditions at the time of the recording process commencement and two image processes of image processing according to the imaging conditions after a setup change has been performed and two video data files will be archived in the flash memory 11.

Accordingly, even in cases of an imaging condition setup change failure, since the source video data "B" is archived, the failure of the imaging condition setup change can be collateralized. Also, the video which has not undergone an imaging condition setup change, since both the source video data "B" and the video data "A" after a setup change are archived, the effect of an imaging condition setup change, etc. can be confirmed by comparing the video which has undergone a setup change.

Besides, by being able to observe the changed condition of the image for the source video data "B" and the video data "A" after a setup change, the user can study exactly how an image will change when displayed and a setup for future imaging conditions can be anticipated. In this manner, an appropriate imaging condition can be set up corresponding to the photography situation, photograph intention, etc.

Moreover, during video playback in comparison with the modified example two, the encumbrance of video playback processing of only the portion which has not undergone image processing corresponding to the image conditions is mitigated.

Also, in the modified example three of the recording method of the source video data "B", although the frames archived before an imaging condition setup change are copied and the frames to which image processing is applied according to the imaging conditions when the image recording process commences after those copied frames (refer to FIG. 9), the operation may be made not to copy the frames archived before an imaging condition setup change.

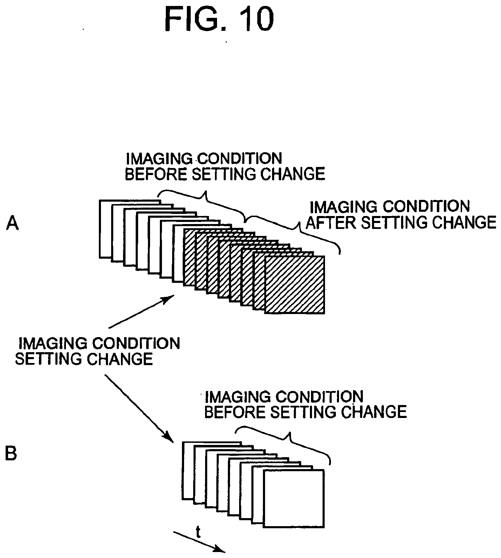

FIG. 10 shows the state of the video data "A" and the source data "B" after a setup change when recorded in the flash memory 11 of modified example three.

As seen in this diagram, the source video "B" is only video data imaged after an imaging condition setup change and image processing is applied according to the imaging conditions when the image recording process commences.

Also, the correlated video data "A" and the source video data "B" after a setup change are archived (saved) in the flash memory 11. The operation determines whether or not the user desires to display the video data "A" after a setup change during video playback or desires the source video data "B" to be displayed. When in the case of displaying the source video data "B", the operation first replays the video data before a setup change of the video data "A. " Then, the video data "B" (video data after a setup change) is played back.

Accordingly, the wasteful archiving of the completely same video data can be excluded and the storage capacity of the flash memory 11 can be used efficiently.

Furthermore, in the modified example three, when an imaging condition setup change is performed in a video recording archive processing, the video data (video archived in the flash memory 11 by the above-mentioned preferred embodiment) and the source video data (video data to which image processing is applied according the imaging conditions when a video recording archive process commences) to which image processing according to the imaging conditions after this setup change has been applied is archived in the flash memory 11. However, with regard to whether or not an imaging condition setup change is performed during video recording archive processing, it is possible to make the operation archive both video data to which image processing has not been applied in the flash memory 11. In relation to video data to which this image processing is applied, in cases where an imaging condition setup change is performed in a video recording archive process, the video data (video data archived in the flash memory 11 by the above-mentioned preferred embodiment) to which image processing corresponding to this imaging condition according to the applied setup change will be archived.

Moreover, it is possible to combine modified example one and modified example two, as well as combine modified example one and modified example three.

In conclusion, the photography device in each of the above-mentioned preferred embodiments is not limited to the above-mentioned preferred embodiments. A digital camera, PDA, personal computer, digital video camera, etc. may be applicable. In other words, any type of equipment which can record video is effective.

While the present invention has been described with reference to the preferred embodiments, it is intended that the invention be not limited by any of the details of the description therein but includes all the embodiments which fall within the scope of the appended claims.

## Claims

1. A photography device comprising:
an imaging means (4,5,6) for imaging an imaged object and outputting video data;
a recording control means (9) for recording video data outputted from said imaging means to a recording means (11); and
a setup change means (15) for changing setup of the photography device;
a menu display control means (9) for displaying in a display means (10) a menu screen to change setup of the photography device during a recording operation by said recording control means of video data to said recording means, wherein the setup is changed by a user according to said menu screen displayed in said display means by said menu display control means; and
an image display control means (9) for displaying in said display means video data outputted from said imaging means during a recording operation by said recording control means of video data to said recording means,
**characterised in that**
said menu display control means includes means for displaying in said display means said menu screen simultaneously with video data displayed in said display means by said image display control means;
said menu screen is for changing setup of the photography device and for changing setup of video recording;
wherein the menu screen comprises a plurality of item fields for changing an imaging condition of a current video recording;
wherein said setup change means includes a selection means for selecting one of the item fields and for changing the thusly selected item field, thereby changing setup for the current video recording according to said menu screen; and
said image display control means, when a setup for video photography is changed by said setup change means, displays video data in which said changed setup was performed, on said display means.

2. The photography device according to claim 1, wherein said menu display control means includes means for displaying in said display means said menu screen in layers superimposed on video data displayed by said image display control means.

3. The photography device according to any of claims 1 to 2, wherein said recording control means records video data to said recording means from among video data displayed in said display means by said image display control means and said menu screen displayed in said display means by said menu display control means, and prohibits recording to said recording means of said menu screen.

4. The photography device according any of claims 1 to 2, further
**characterized by**
a mode selection means for selecting either a first mode or a second mode; and said recording control means includes means for prohibiting recording to said recording means data related to said menu screen displayed in said display means by said menu display control means when said first mode has been selected by said mode selection means.

5. The photography device according to claim 4, wherein said recording control means records video data outputted from said imaging means and data related to said menu screen displayed in said display means by said menu display control means to said recording means when said second mode has been selected by said mode selection means.

6. The photography device according to claim 5, wherein said recording control means records correlated video data outputted from said imaging means and data related to said menu screen to said recording means when said second mode has been selected by said mode selection means.

7. The photography device according to claim 5, wherein said recording control means records composite video data outputted from said imaging means and image data of said menu screen as combined video data to said recording means when said second mode has been selected by said mode selection means.

8. The photography device according to any of claims 1 to 7, further **characterized by**:
a menu display instruction means for instructing display in said display means of said menu screen; and
said menu display control means displays in said display means said menu screen when instructed to display said menu screen by said menu display instruction means.

9. The photography device according to claim 1, wherein said recording control means records video data to said recording means based on changed setup, when setup for a video recording has been changed by said setup change means.

10. The photography device according to claim 9, further **characterized by** an image processing means for applying image processing to video data outputted from said imaging means;
said image processing means applies image processing based on changed setup to video data outputted from said imaging means after setup changes, when setup for a video recording has been changed by said setup change means; and
said recording control means records video data with applied image processing by said image processing means to said recording means.

11. The photography device according to claim 10, wherein said recording means records both video data with applied image processing by said image processing means and video data without applied image processing by said image processing means to said recording means.

12. The photography device according to claim 10, further **characterized by** a discrimination means for discriminating whether or not setup has been changed by said setup change means;
said image processing means applies image processing based on changed setup and image processing based on setup before being changed, respectively, to video data outputted from said imaging means after setup changes, when discriminated setup has been changed by said discrimination means; and
said recording control means records both image data with applied image processing based on changed setup and video data with applied image processing based on setup before being changed to said recording means.

13. The photography device according to claim 1, wherein said recording control means records video data that does not reflect setup changed by said setup change means and setup change information changed by said setup change means to said recording means.

14. A photography method for a photography device according to claim 1, **characterized by** the steps of:
imaging an imaged object and outputting video data;
recording video data on a recording medium;
displaying in a display section a menu screen to change setup of the photography device during a recording operation by said step for recording of video data to said recording medium;
selecting one of the item fields of the menu screen, and changing the thusly selected item filed, thereby changing setup of the photography device for the recording operation by a user according to said menu screen displayed in said display section; and
when a setup for video photography is changed by said setup change means, displaying video data in which said changed setup was performed, on said display means.

15. A program documentation medium for storing a recording control program executed by a processor in a photography device according to claim 1, **characterized by** the steps of:
imaging an imaged object and outputting video data;
recording video data on a recording medium;
displaying in a display section a menu screen to change setup of the photography device during a recording operation by said step for recording of video data to said recording medium;
selecting one of the item fields of the menu screen, and changing the thusly selected item filed, thereby changing setup of the photography device for the recording operation by a user according to said menu screen displayed on said display section; and
when a setup for video photography is changed by said setup change means, displaying video data in which said changed setup was performed, on said display means.

16. The photography device according to claim 1,
wherein said setup change means further comprises, from the inside of the menu screen for changing a setup for said video photography, a selection means in which a user selects a setting item for desired video photography and an instructing means for instructing setup execution according to a setting item for video photography selected by said selection means,
wherein said image display control means further comprises a means for displaying, on said display means, video data in which a setup was performed according to a setting item for video photography selected by said selecting means, and
wherein said recording control means records, on said recording means, video data in which said instructed setup is performed when execution of said setup for video photography is instructed by said instruction means.

## Patentansprüche

1. Fotografische Vorrichtung, umfassend:
eine Abbildungseinrichtung (4, 5, 6) zum Abbilden eines Abbildungsobjekts und zum Ausgeben von Videodaten;
eine Aufzeichnungssteuereinrichtung (9) zum Aufzeichnen von Videodaten, ausgegeben aus der Abbildungseinrichtung, auf einer Aufzeichnungseinrichtung (11); und
eine Einstellungsänderungseinrichtung (15) zur Änderung der Einstellung der fotografischen Vorrichtung;
eine Menüanzeige-Steuereinrichtung (9) zum Anzeigen eines Menü-Bildschirms in einer Anzeigeeinrichtung (10), um die Einstellung der fotografischen Vorrichtung während einer Aufzeichnungsoperation durch die Aufzeichnungssteuereinrichtung von Videodaten auf der Aufzeichnungseinrichtung zu ändern, wobei die Einstellung durch einen Nutzer in Übereinstimmung mit dem in der Anzeigeeinrichtung angezeigten Menübildschirm mittels der Menüanzeige-Steuereinrichtung geändert wird; und
eine Bildanzeige-Steuereinrichtung (9) zum Anzeigen, in der Anzeigeeinrichtung, von Videodaten, die von der Abbildungseinrichtung, während einer Aufzeichnungsoperation, durch die Aufzeichnungssteuereinrichtung, von Videodaten auf der Aufzeichnungseinrichtung, ausgegeben werden,
**dadurch gekennzeichnet, dass**
die Menüanzeige-Steuereinrichtung eine Einrichtung zum Anzeigen, in der Anzeigeeinrichtung, des Menübildschirms gleichzeitig mit den in der Anzeigeeinrichtung durch die Bildanzeige-Steuereinrichtung angezeigten Videodaten einschließt;
der Menübildschirm zur Änderung der Einstellung der fotografische Vorrichtung und zur Änderung der Einstellung der Videoaufzeichnung da ist;
der Menübildschirm eine Vielzahl an Menüpunktfeldern zur Änderung eines Abbildungszustands einer laufenden Videoaufzeichnung umfasst;
wobei die Einstellungsänderungseinrichtung eine Auswahleinrichtung zum Auswählen eines der Menüpunktfelder und zur Änderung des so ausgewählten Menüpunktfeldes einschließt, wodurch die Einstellung für die laufende Videoaufzeichnung in Übereinstimmung mit dem Menübildschirm geändert wird; und
die Bildanzeige-Steuereinrichtung, wenn die Einstellung für die Videofotografie durch die Einstellungsänderungseinrichtung verändert wird, Videodaten, in denen die geänderte Einstellung erfolgt ist, auf der Anzeigeeinrichtung anzeigt.

2. Fotografische Vorrichtung nach Anspruch 1, wobei die Menüanzeige-Steuereinrichtung eine Einrichtung zum Anzeigen, in der Anzeigeeinrichtung, des Menübildschirms in Schichten, die Videodaten überlagert sind, die durch die Bildanzeige-Steuereinrichtung angezeigt werden, einschließt.

3. Fotografische Vorrichtung nach einem der Ansprüche 1 bis 2, wobei die Aufzeichnungssteuereinrichtung Videodaten auf der Aufzeichnungseinrichtung aus Videodaten, die in der Anzeigeeinrichtung durch die Bildanzeige-Steuereinrichtung angezeigt werden, und dem Menübildschirm, in der Anzeigeeinrichtung durch die Menüanzeige-Steuereinrichtung angezeigt, aufzeichnet, und eine Aufzeichnung des Menübildschirms auf die Aufzeichnungseinrichtung unterbindet.

4. Fotografische Vorrichtung nach einem der Ansprüche 1 bis 2, des Weiteren
**gekennzeichnet, durch**
eine Modus-Auswahleinrichtung zur Auswahl entweder eines ersten Modus oder eines zweiten Modus; und wobei die Aufzeichnungssteuereinrichtung eine Einrichtung zur Unterbindung einer Aufzeichnung von Daten auf die Aufzeichnungseinrichtung einschließt, die in Beziehung zu dem Menübildschirm stehen, der in der Anzeigeeinrichtung durch die Menüanzeige-Steuereinrichtung angezeigt wird, wenn der erste Modus durch die Modus-Auswahleinrichtung ausgewählt worden ist.

5. Fotografische Vorrichtung nach Anspruch 4, wobei die Aufzeichnungssteuereinrichtung Videodaten, ausgegeben von der Abbildungseinrichtung, und Daten, die in Beziehung zu dem Menübildschirm stehen, in der Anzeigeeinrichtung durch die Menüanzeige-Steuereinrichtung angezeigt, auf der Aufzeichnungseinrichtung aufzeichnet, wenn der zweite Modus durch die Modus-Auswahleinrichtung ausgewählt worden ist.

6. Fotografische Vorrichtung nach Anspruch 5, wobei die Aufzeichnungssteuereinrichtung korrelierte Videodaten, ausgegeben von der Abbildungseinrichtung, und Daten, die in Beziehung zu dem Menübildschirm stehen, auf der Aufzeichnungseinrichtung aufzeichnet, wenn der zweite Modus durch die Modus-Auswahleinrichtung ausgewählt worden ist.

7. Fotografische Vorrichtung nach Anspruch 5, wobei die Aufzeichnungssteuereinrichtung zusammengesetzte Videodaten, ausgegeben von der Abbildungseinrichtung, und Bilddaten des Menübildschirms als kombinierte Videodaten auf der Aufzeichnungseinrichtung aufzeichnet, wenn der zweite Modus durch die Modus-Auswahleinrichtung ausgewählt worden ist.

8. Fotografische Vorrichtung nach einem der Ansprüche 1 bis 7, die des Weiteren durch eine Menüanzeige-Anweisungseinrichtung zur Anweisung einer Anzeige in der Anzeigeeinrichtung des Menübildschirms gekennzeichnet ist; und
die Menüanzeige-Steuereinrichtung in der Anzeigeeinrichtung den Menübildschirm anzeigt, wenn sie durch die Menüanzeige-Anweisungseinrichtung angewiesen wird, den Menübildschirm anzuzeigen.

9. Fotografische Vorrichtung nach Anspruch 1, wobei die Aufzeichnungssteuereinrichtung Videodaten auf der Aufzeichnungseinrichtung aufzeichnet, basierend auf einer geänderten Einstellung, wenn die Einstellung für eine Videoaufzeichnung durch die Einstellungs-Änderungseinrichtung geändert worden ist.

10. Fotografische Vorrichtung nach Anspruch 9, die des Weiteren durch eine Bildverarbeitungseinrichtung zur Anwendung einer Bildverarbeitung auf Videodaten, die von der Abbildungseinrichtung ausgegeben werden, gekennzeichnet ist;
wobei die Bildverarbeitungseinrichtung eine auf die geänderte Einstellung basierende Bildverarbeitung auf Videodaten anwendet, die von der Abbildungseinrichtung nach den Einstellungsänderungen ausgegeben werden, wenn die Einstellung für eine Videoaufzeichnung durch die Einstellungs-Änderungseinrichtung geändert worden ist; und
die Aufzeichnungssteuereinrichtung Videodaten mit durch die Bildverarbeitungseinrichtung angewandter Bildverarbeitung auf der Aufzeichnungseinrichtung aufzeichnet.

11. Fotografische Vorrichtung nach Anspruch 10, wobei die Aufzeichnungseinrichtung beide, d.h. Videodaten mit durch die Bildverarbeitungseinrichtung angewandter Bildverarbeitung und Videodaten ohne durch die Bildverarbeitungseinrichtung angewandter Bildverarbeitung, auf der Aufzeichnungseinrichtung aufzeichnet.

12. Fotografische Vorrichtung nach Anspruch 10, die des Weiteren durch eine Unterscheidungseinrichtung zur Unterscheidung, ob die Einstellung durch die Einstellungs-Änderungsvorrichtung verändert worden ist, oder nicht, gekennzeichnet ist;
wobei die Bildverarbeitungseinrichtung eine auf einer geänderten Einstellung basierende Bildverarbeitung, beziehungsweise eine auf einer Einstellung, bevor sie verändert wurde, basierende Bildverarbeitung auf Videodaten anwendet, die von der Abbildungseinrichtung nach Einstellungsänderungen ausgegeben werden, wenn durch die Unterscheidungseinrichtung unterschiedene (discriminated) Einstellung geändert worden ist; und
wobei die Aufzeichnungssteuereinrichtung beide, d.h. Bilddaten mit auf einer geänderten Einstellung basierenden angewandten Bildverarbeitung und Videodaten mit auf einer vor einer Änderung der Einstellung basierenden angewandten Bildverarbeitung, auf der Aufzeichnungseinrichtung aufzeichnet.

13. Fotografische Vorrichtung nach Anspruch 1, wobei die Aufzeichnungssteuereinrichtung Videodaten, die keine Einstellung widerspiegeln, die durch die Einstellungs-Änderungseinrichtung geändert wurde, und durch die Einstellungs-Änderungseinrichtung geänderte Einstellungsänderungsinformation auf der Aufzeichnungseinrichtung aufzeichnet.

14. Fotografisches Verfahren für eine fotografische Vorrichtung nach Anspruch 1, **gekennzeichnet durch** die nachstehenden Schritte:
Abbilden eines Abbildungsobjekts und Ausgeben von Videodaten;
Aufzeichnen von Videodaten auf einem Aufzeichnungsmedium;
Anzeigen, in einem Anzeigeabschnitt, eines Menübildschirms, um die Einstellung der fotografische Vorrichtung während einer Aufzeichnungsoperation mittels des Schritts zur Aufzeichnung von Videodaten auf dem Aufzeichnungsmedium zu ändern;
Auswählen eines der Menüpunktfelder des Menübildschirms, und Ändern des so ausgewählten Menüpunktfeldes, wodurch eine Änderung der Einstellung der fotografischen Vorrichtung für die Aufzeichnungsoperation durch einen Nutzer in Übereinstimmung mit dem in dem Anzeigeabschnitt angezeigten Menübildschirm erfolgt; und
wenn eine Einstellung für die Videofotografie durch die Einstellungsänderungseinrichtung geändert wird, Anzeigen von Videodaten, in denen die geänderte Einstellung erfolgt ist, auf der Anzeigeeinrichtung.

15. Prorammdokumentationsmedium zur Speicherung eines von einem Prozessor in einer fotografischen Vorrichtung nach Anspruch 1 ausgeführten Steuerprogramms, das durch die nachstehenden Schritte gekennzeichnet ist:
Abbilden eines Abbildungsobjekts und Ausgeben von Videodaten;
Aufzeichnen von Videodaten auf einem Aufzeichnungsmedium;
Anzeigen, in einem Anzeigeabschnitt, eines Menübildschirms, um die Einstellung der fotografischen Vorrichtung während einer Aufzeichnungsoperation mittels des Schritts zur Aufzeichnung von Videodaten auf dem Aufzeichnungsmedium zu ändern;
Auswählen eines der Menüpunktfelder des Menübildschirms, und Änderung des so ausgewählten Menüpunktfeldes, wodurch eine Änderung der Einstellung der fotografischen Vorrichtung für die Aufzeichnungsoperation durch einen Nutzer in Übereinstimmung mit dem auf dem Anzeigeabschnitt angezeigten Menübildschirm erfolgt; und
wenn eine Einstellung für die Videofotografie durch die Einstellungsänderungseinrichtung geändert wird, Anzeigen von Videodaten, in denen die geänderte Einstellung erfolgt ist, auf der Anzeigeeinrichtung.

16. Fotografische Vorrichtung nach Anspruch 1,
wobei die Einstellungsänderungseinrichtung des Weiteren, von der Innenseite des Menübildschirms zur Änderung einer Einstellung für die Videofotografie, eine Auswahleinrichtung, in der ein Nutzer einen Einstellungsmenüpunkt für die gewünschte Videofotografie auswählt, und eine Anweisungseinrichtung zur Anweisung von Einstellungsausführungen in Übereinstimmung mit einem Einstellungsmenüpunkt für die Videofotografie, ausgewählt durch die Auswahleinrichtung, umfasst,
wobei die Bildanzeigesteuereinrichtung des Weiteren eine Einrichtung zum Anzeigen, auf der Anzeigeeinrichtung, von Videodaten umfasst, in denen eine Einstellung in Übereinstimmung mit einem Einstellungsmenüpunkt für die Videofotografie, ausgewählt durch die Auswahleinrichtung, umfasst, und
wobei die Aufzeichnungssteuereinrichtung auf der Aufzeichnungseinrichtung Videodaten aufzeichnet, in denen die angewiesene Einstellung erfolgt, wenn eine Ausführung der Einstellung für die Videofotografie durch die Anweisungseinrichtung angewiesen wird.

## Revendications

1. Appareil photographique comprenant :
un moyen de formation d'image (4, 5, 6) destiné à mettre en image un objet formé en image et à délivrer en sortie des données vidéo,
un moyen de commande d'enregistrement (9) destiné à enregistrer sur un moyen d'enregistrement (11) les données vidéo délivrées en sortie dudit moyen de formation d'image, et
un moyen de changement de paramétrage (15) destiné à modifier le paramétrage de l'appareil photographique,
un moyen de commande d'affichage de menu (9) destiné à afficher sur un moyen d'affichage (10) un écran de menu pour changer le paramétrage de l'appareil photographique pendant une opération d'enregistrement sur ledit moyen d'enregistrement effectué par ledit moyen de commande d'enregistrement de données vidéo, et
un moyen de commande d'affichage d'image (9) destiné à afficher sur ledit moyen d'affichage les données vidéo délivrées en sortie dudit moyen de formation d'image pendant une opération d'enregistrement sur ledit moyen d'enregistrement effectuée par ledit moyen de commande d'enregistrement de données vidéo,
**caractérisé en ce que**
ledit moyen de commande d'affichage de menu inclut un moyen permettant d'afficher sur ledit moyen d'affichage ledit écran de menu simultanément avec les données vidéo affichées sur ledit moyen d'affichage par ledit moyen de commande d'affichage d'image,
ledit écran de menu étant destiné à modifier le paramétrage de l'appareil photographique et à modifier le paramétrage de l'enregistrement vidéo,
dans lequel l'écran de menu comprend une pluralité de champs d'articles destinés à modifier la condition de formation d'image d'un enregistrement vidéo courant,
dans lequel ledit moyen de changement de paramétrage inclut un moyen de sélection destiné à sélectionner l'un des champs d'articles et à modifier le champ d'article ainsi sélectionné, en changeant de ce fait le paramétrage de l'enregistrement vidéo courant en fonction dudit écran de menu, et
ledit moyen de commande d'affichage d'image affiche sur ledit moyen d'affichage, lorsque le paramétrage destiné à la photographie vidéo est modifié par ledit moyen de changement de paramétrage, des données vidéo dans lesquelles ledit paramétrage modifié a été effectué.

2. Appareil photographique selon la revendication 1, dans lequel ledit moyen de commande d'affichage de menu inclut un moyen permettant d'afficher sur ledit moyen d'affichage ledit écran de menu en couches superposées sur les données vidéo affichées par ledit moyen de commande d'affichage d'image.

3. Appareil photographique selon l'une quelconque des revendications 1 à 2, dans lequel ledit moyen de commande d'enregistrement enregistre les données vidéo sur ledit moyen d'enregistrement parmi les données vidéo affichées sur ledit moyen d'affichage par ledit moyen de commande d'affichage d'image et ledit écran de menu affiché sur ledit moyen d'affichage par ledit moyen de commande d'affichage de menu, et il empêche l'enregistrement dudit écran de menu sur ledit moyen d'enregistrement.

4. Appareil photographique selon l'une quelconque des revendications 1 à 2,
**caractérisé en outre par :**
un moyen de sélection de mode permettant de sélectionner soit un premier mode, soit un second mode ; et ledit moyen de commande d'enregistrement inclut un moyen permettant d'empêcher l'enregistrement, sur ledit moyen d'enregistrement, de données se rapportant au dit écran de menu affiché sur ledit moyen d'affichage par ledit moyen de commande d'affichage lorsque ledit premier mode a été sélectionné par ledit moyen de sélection de mode.

5. Appareil photographique selon la revendication 4, dans lequel ledit moyen de commande d'enregistrement enregistre sur ledit moyen d'enregistrement les données vidéo délivrées en sortie dudit moyen de formation d'image et les données se rapportant au dit écran de menu affiché dans ledit moyen d'affichage par ledit moyen de commande d'affichage de menu, lorsque ledit second mode a été sélectionné par ledit moyen de sélection de mode.

6. Appareil photographique selon la revendication 5, dans lequel ledit moyen de commande d'enregistrement enregistre sur ledit moyen d'enregistrement des données vidéo corrélées délivrées en sortie dudit moyen de formation d'image ainsi que des données se rapportant au dit écran de menu lorsque ledit second mode a été sélectionné par ledit moyen de sélection de mode.

7. Appareil photographique selon la revendication 5, dans lequel ledit moyen de commande d'enregistrement enregistre sur ledit moyen d'enregistrement des données vidéo composites délivrées en sortie dudit moyen de formation d'image et des données d'image dudit écran de menu sous forme de données vidéo combinées lorsque ledit second mode a été sélectionné par ledit moyen de sélection de mode.

8. Appareil photographique selon l'une quelconque des revendications 1 à 7, **caractérisé en outre par** un moyen de délivrance d'instructions d'affichage de menu destiné à donner des instructions à l'affichage dans ledit moyen d'affichage dudit écran de menu, et
ledit moyen de commande d'affichage de menu affiche sur ledit moyen d'affichage ledit écran de menu lorsqu'il reçoit l'instruction d'afficher ledit écran de menu ordonné par ledit moyen d'instruction d'affichage de menu.

9. Appareil photographique selon la revendication 1, dans lequel ledit moyen de commande d'enregistrement enregistre sur ledit moyen d'enregistrement des données vidéo sur la base d'un paramétrage modifié lorsque le paramétrage pour un enregistrement vidéo a été modifié par ledit moyen de changement de paramétrage.

10. Appareil photographique selon la revendication 9, **caractérisé en outre par** un moyen de traitement d'image destiné à appliquer un traitement d'image aux données vidéo délivrées en sortie dudit moyen de formation d'image,
ledit moyen de traitement d'image applique, sur les données vidéo en sortie dudit moyen de formation d'image après les modifications de paramétrage, un traitement d'image fondé sur le paramétrage modifié lorsque le paramétrage destiné à un enregistrement vidéo a été modifié par ledit moyen de changement de paramétrage, et
ledit moyen de commande d'enregistrement enregistre sur ledit moyen d'enregistrement des données vidéo comportant un traitement d'image appliqué par ledit moyen de traitement d'image.

11. Appareil photographique selon la revendication 10, dans lequel ledit moyen d'enregistrement enregistre sur ledit moyen d'enregistrement à la fois les données vidéo comportant un traitement d'image appliqué par ledit moyen de traitement d'image et des données vidéo sans traitement d'image appliqué par ledit moyen de traitement d'image.

12. Appareil photographique selon la revendication 10, **caractérisé en outre par** un moyen de discrimination destiné à effectuer une discrimination sur le fait que le paramétrage a ou non été modifié par ledit moyen de changement de paramétrage,
ledit moyen de traitement d'image applique respectivement sur des données vidéo délivrées en sortie dudit moyen de formation d'image après les modifications de paramétrage le traitement d'image sur la base du paramétrage modifié et sur le traitement d'image fondé sur le paramétrage avant qu'il soit modifié, lorsque le paramétrage discriminé a été modifié par ledit moyen de discrimination, et
ledit moyen de commande d'enregistrement enregistre sur ledit moyen d'enregistrement à la fois les données d'image comportant le traitement d'image appliqué et les données vidéo comportant le traitement d'image appliqué fondé sur le paramétrage avant qu'il soit modifié.

13. Appareil photographique selon la revendication 1, dans lequel ledit moyen de commande d'enregistrement enregistre sur ledit moyen d'enregistrement des données vidéo qui ne reflètent pas le paramétrage modifié par ledit moyen de changement de paramétrage et des informations de changement de paramétrage modifiées par ledit moyen de changement de paramétrage.

14. Procédé de photographie destiné à un appareil photographique conforme à la revendication 1, **caractérisé par** les étapes suivantes :
la mise en image d'un objet formé en image et la délivrance en sortie de données vidéo,
l'enregistrement de données vidéo sur un support d'enregistrement,
l'affichage dans une section d'affichage d'un écran de menu permettant de modifier le paramétrage de l'appareil photographique pendant une opération d'enregistrement effectuée par ladite étape d'enregistrement de données vidéo sur ledit support d'enregistrement,
la sélection de l'un des champs d'articles de l'écran de menu et le changement du champ d'article ainsi sélectionné, ce qui change de ce fait le paramétrage de l'appareil photographique pour l'opération d'enregistrement par un utilisateur conformément au dit écran de menu affiché dans ladite section d'affichage, et
lorsque le paramétrage de photographie vidéo est modifié par ledit moyen de changement de paramétrage, l'affichage sur ledit moyen d'affichage des données vidéo dans lesquelles ledit paramétrage modifié a été effectué.

15. Support de documentation de programme destiné à stocker un programme de commande d'enregistrement exécuté par un processeur dans un appareil photographique conforme à la revendication 1, **caractérisé par** les étapes suivantes :
la mise en image d'un objet formé en image et la délivrance en sortie de données vidéo,
l'enregistrement de données vidéo sur un support d'enregistrement,
l'affichage dans une section d'affichage d'un écran de menu permettant de modifier le paramétrage de l'appareil photographique pendant une opération d'enregistrement effectuée par ladite étape d'enregistrement de données vidéo sur ledit support d'enregistrement,
la sélection de l'un des champs d'articles de l'écran de menu et le changement du champ d'article ainsi sélectionné, ce qui change de ce fait le paramétrage de l'appareil photographique pour l'opération d'enregistrement par un utilisateur conformément au dit écran de menu affiché dans ladite section d'affichage, et
lorsque le paramétrage de photographie vidéo est modifié par ledit moyen de changement de paramétrage, l'affichage sur ledit moyen d'affichage des données vidéo dans lesquelles ledit paramétrage modifié a été effectué.

16. Appareil photographique selon la revendication 1,
dans lequel ledit moyen de changement de paramétrage comprend en outre, depuis l'intérieur de l'écran de menu permettant de modifier un paramétrage pour ladite photographie vidéo, un moyen de sélection dans lequel un utilisateur sélectionne un article de réglage pour une photographie vidéo désirée et un moyen de délivrance d'instructions permettant d'ordonner l'exécution du paramétrage conforme à l'article de réglage pour la photographie vidéo sélectionnée par ledit moyen de sélection,
dans lequel ledit moyen de commande d'affichage d'image comprend en outre un moyen permettant d'afficher sur ledit moyen d'affichage des données vidéo dans lesquelles un paramétrage a été effectué conformément à un article de réglage pour la photographie vidéo sélectionnée par ledit moyen de sélection, et
dans lequel ledit moyen de commande d'enregistrement enregistre sur ledit moyen d'enregistrement des données vidéo dans lesquelles ledit paramétrage ordonné est effectué lorsque l'exécution dudit paramétrage pour la photographie vidéo est ordonnée par ledit moyen d'instruction.
